(19) Europäisches Patentamt
European Patent Office
Office européen des brevets

(11) **EP 4 576 256 A1**

(12) **EUROPEAN PATENT APPLICATION**
published in accordance with Art. 153(4) EPC

(43) Date of publication:
**25.06.2025 Bulletin 2025/26**

(21) Application number: **23865740.7**

(22) Date of filing: **16.08.2023**

(51) International Patent Classification (IPC):
$H01M\ 4/505^{(2010.01)}$     $H01M\ 4/525^{(2010.01)}$
$H01M\ 4/36^{(2006.01)}$     $H01M\ 10/058^{(2010.01)}$
$H01M\ 10/0525^{(2010.01)}$     $H01M\ 10/44^{(2006.01)}$
$H01M\ 4/62^{(2006.01)}$     $H01M\ 10/052^{(2010.01)}$
$H01M\ 4/02^{(2006.01)}$

(52) Cooperative Patent Classification (CPC):
**H01M 4/02; H01M 4/36; H01M 4/505; H01M 4/525; H01M 4/62; H01M 10/052; H01M 10/0525; H01M 10/058; H01M 10/44;** Y02E 60/10

(86) International application number:
**PCT/KR2023/012102**

(87) International publication number:
**WO 2024/058440 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 KR 20220116415**
**28.09.2022 KR 20220123670**

(71) Applicants:
• **SK On Co., Ltd.**
**Seoul 03161 (KR)**
• **SK innovation Co., Ltd.**
**Seoul 03188 (KR)**

(72) Inventors:
• **PARK, Young Uk**
**Daejeon 34124 (KR)**
• **KIM, Seung Hyun**
**Daejeon 34124 (KR)**
• **CHO, Yong Hyun**
**Daejeon 34124 (KR)**
• **CHOI, Jae Young**
**Daejeon 34124 (KR)**

(74) Representative: **Prüfer & Partner mbB**
**Patentanwälte · Rechtsanwälte**
**Sohnckestraße 12**
**81479 München (DE)**

(54) **LITHIUM SECONDARY BATTERY AND OPERATION METHOD THEREFOR**

(57) A lithium secondary battery according to exemplary embodiments may include a cathode which includes: a cathode current collector, and a cathode active material layer formed on the cathode current collector and including cathode active material particles; and an anode disposed to face the cathode. The cathode active material particles may include activated over-lithiated oxide particles and a coating material formed on at least a portion of the surface of the activated particles and containing a coating element. An upper limit of operation voltage of the lithium secondary battery may be 4.5 V or less relative to the oxidation-reduction potential of lithium.

[FIG. 1]

**Description**

[Technical Field]

The present disclosure relates to a lithium secondary battery and an operation method of a lithium secondary battery. More specifically, the present disclosure relates to a lithium secondary battery which includes over-lithiated oxide as a cathode active material and an operation method of the lithium secondary battery.

[Background Art]

A secondary battery is a battery which can be repeatedly charged and discharged, and has been widely applied to portable electronic devices such as a mobile phone, a laptop computer, etc. as a power source thereof.

Among the secondary batteries, a lithium secondary battery has a high operation voltage and a high energy density per unit weight, and is advantageous in terms of a charging speed and light weight. In this regard, the lithium secondary battery has been actively developed and applied to various industrial fields.

The lithium secondary battery may store an electric energy by a difference in chemical potential when lithium ions are intercalated and deintercalated between a cathode and an anode. Accordingly, the lithium secondary battery may use materials capable of reversibly intercalating and deintercalating the lithium ions as a cathode active material and an anode active material.

For example, as the cathode active material, lithium metal oxide particles having a layered crystal structure of $ABO_2$ (e.g., lithium cobalt oxide ($LiCoO_2$), lithium nickel oxide ($LiNiO_2$), lithium manganese oxide ($LiMnO_2$), lithium iron phosphate (LFP), lithium nickel-cobalt-manganese oxide (NCM), lithium nickel-aluminum-manganese oxide (NCA), etc.) are used. The lithium metal oxide particles may realize a reversible capacity of about 100 mAh/g to 230 mAh/g.

Meanwhile, as the lithium secondary battery is applied to electric vehicles (EVs), lithium metal oxide particles having a higher capacity than the lithium metal oxide particles are being researched and developed.

The over-lithiated oxide particles are known to have a structure in which lithium is inserted into a transition metal site of lithium metal oxide particles having a layered crystal structure of $ABO_2$. Accordingly, the over-lithiated oxide particles may be expressed as $Li_aM_bO_2$ (M is a transition metal such as Mn, Ni or Co, etc., and a and b satisfy $a/b \geq 1.05$).

According to XRD analysis results for the over-lithiated oxide particles, the over-lithiated oxide particles may include $Li_2MnO_3$ domains (C2/m space group) and $LiMO_2$ domains (R3m space group, M is Mn, Ni or Co, etc.). Accordingly, the over-lithiated oxide particles may be expressed as $xLi_2MnO_3 \cdot (1-x)LiMO_2$ (0.05<x<1).

The over-lithiated oxide particles may exhibit a reversible capacity of 250 mAh/g or more by an electrochemical reaction of $Li_2MnO_3$.

For example, $Li_2MnO_3$ is electrochemically inactive, but may be converted into $LiMnO_2$ as shown in Scheme 1 below by an activation process (e.g., charging and discharging a lithium secondary battery using over-lithiated oxide particles at 4.4 V (vs $Li/Li^+$) or more). The $LiMnO_2$ may reversibly intercalate and deintercalate lithium ions as shown in Scheme 2 below. Accordingly, the over-lithiated oxide particles may exhibit a high reversible capacity according to the $LiMO_2$ domains and the $Li_2MnO_3$ domains.

[Scheme 1] (Charge) $Li_2MnO_3 \rightarrow MnO_2 + 2Li^+ + 1/2O_2 + 2e^-$ (Discharge) $MnO_2 + Li^+ + e^- \rightarrow LiMnO_2$

[Scheme 2] (Charge) $LiMnO_2 \rightarrow MnO_2 + Li^+ + e^-$ (Discharge) $MnO_2 + Li^+ + e^- \rightarrow LiMnO_2$

[Summary of Invention]

[Problems to be Solved by Invention]

An object of the present disclosure is to provide a lithium secondary battery having a high capacity and improved operating stability.

Another object of the present disclosure is to provide an operation method of a lithium secondary battery having improved stability.

[Means for Solving Problems]

A lithium secondary battery according to exemplary embodiments may include: a cathode which includes a cathode current collector, and a cathode active material layer formed on the cathode current collector and including cathode active material particles; and an anode disposed to face the cathode. The cathode active material particles may include over-lithiated oxide particles represented by Formula 1 below, and a coating material formed on at least a portion of the surface of the over-lithiated oxide particles and containing a coating element. An upper limit of operation voltage of the lithium secondary battery may be 4.5 V or less relative to an oxidation-reduction potential of lithium.

[Formula 1]     $Li_a[M_xNi_yMn_z]O_b$

In Formula 1, M is at least one of Co, Mg, V, Ti, Al, Fe, Ru, Zr, W, Sn, Nb, Mo, Cu, Zn, Cr, Ga, V and Bi, and x, y, z, a and b satisfy $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$.

In one embodiment, the lithium secondary battery may have a D value of greater than 0 and less than 0.31, which is represented by Equation 1 below.

$$[Equation\ 1]$$

$$D = I(Mn^{3+})/[I(Mn^{3+})+I(Mn^{4+})]$$

In Equation 1, $I(Mn^{3+})$ is an area of $Mn^{3+}$ peak in an XPS analysis spectrum when charging and discharging the lithium secondary battery 100 times at 45 ° C and in a voltage range of 2.0 V to 4.5 V, followed by disassembling and analyzing the cathode active material layer by X-ray photoelectron spectroscopy (XPS); and $I(Mn^{4+})$ is an area of $Mn^{4+}$ peak in the XPS analysis spectrum.

In one embodiment, a content of manganese in the over-lithiated oxide particles may range from 50 to 75 mol% based on a total number of moles of all elements except for lithium and oxygen.

In one embodiment, the content of cobalt in the over-lithiated oxide particles may be 2 mol% or less based on the total number of moles of all elements except for lithium and oxygen.

In one embodiment, the over-lithiated oxide particle may include domains derived from $Li_2MnO_3$ domains and/or $Li_2MnO_3$ domains.

In one embodiment, the domains derived from the $Li_2MnO_3$ domains may include at least one of $MnO_2$, $Mn_2O_4$, $LiMnO_2$, $LiMn_2O_4$ and $Li_2Mn_2O_4$.

In one embodiment, the coating element may include at least one of B, Al, W, Zr, Ti, Mg and Co.

In one embodiment, a content of the coating element in the cathode active material particles may range from 500 to 8,000 ppm based on a total weight of all elements except for lithium and oxygen.

In one embodiment, a content of the over-lithiated oxide particles may be 80 wt% or more based on a total weight of the cathode active material layer.

In one embodiment, an operation voltage range may range from 2.0 V to 4.5 V relative to the oxidation-reduction potential of lithium.

In accordance with an operation method of a lithium secondary battery according to exemplary embodiments, a lithium secondary battery which includes: a cathode including cathode active material particles which include over-lithiated oxide particles represented by Formula 1 below, and a coating material formed on at least a portion of the surface of the over-lithiated oxide particles and containing a coating element; and an anode may be prepared. The lithium secondary battery may be charged and discharged only in a voltage section of 4.5 V or less relative to an oxidation-reduction potential of lithium.

[Formula 1]     $Li_a[M_xNi_yMn_z]O_b$

In Formula 1, M is at least one of Co, Mg, V, Ti, Al, Fe, Ru, Zr, W, Sn, Nb, Mo, Cu, Zn, Cr, Ga, V and Bi, and x, y, z, a and b satisfy $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$.

In one embodiment, preparing the lithium secondary battery may include charging and discharging the lithium secondary battery in a range of 1 to 10 times at a voltage greater than 4.5 V relative to the oxidation-reduction potential of lithium.

[Advantageous effects]

The lithium secondary battery according to exemplary embodiments may include over-lithiated oxide to have a high capacity. The lithium secondary battery may have a predetermined upper limit of operation voltage, thereby suppressing voltage decay.

In accordance with the operation method of a lithium secondary battery according to exemplary embodiments, voltage decay of the lithium secondary battery may be suppressed due to the over-lithiated oxide.

[Brief Description of Drawings]

FIGS. 1 and 2 are a schematic plan view and a cross-sectional view illustrating a lithium secondary battery according to exemplary embodiments, respectively.

FIG. 3 is a flowchart briefly illustrating an operation method of a lithium secondary battery according to exemplary embodiments.

[Mode for Carrying out Invention]

According to exemplary embodiments of the present disclosure, a lithium secondary battery having improved operational reliability even when including over-lithiated oxide particles (OLO) may be provided.

In addition, an operation method of a lithium secondary battery capable of improving operational reliability of the lithium secondary battery using the over-lithiated oxide particles may be provided.

Hereinafter, a cathode for a lithium secondary battery and a lithium secondary battery including the same according to exemplary embodiments of the present disclosure will be described in more detail with reference to the drawings. However, the drawings and the embodiments are merely an example, and the present disclosure is not limited to the drawings and the embodiments described as the example.

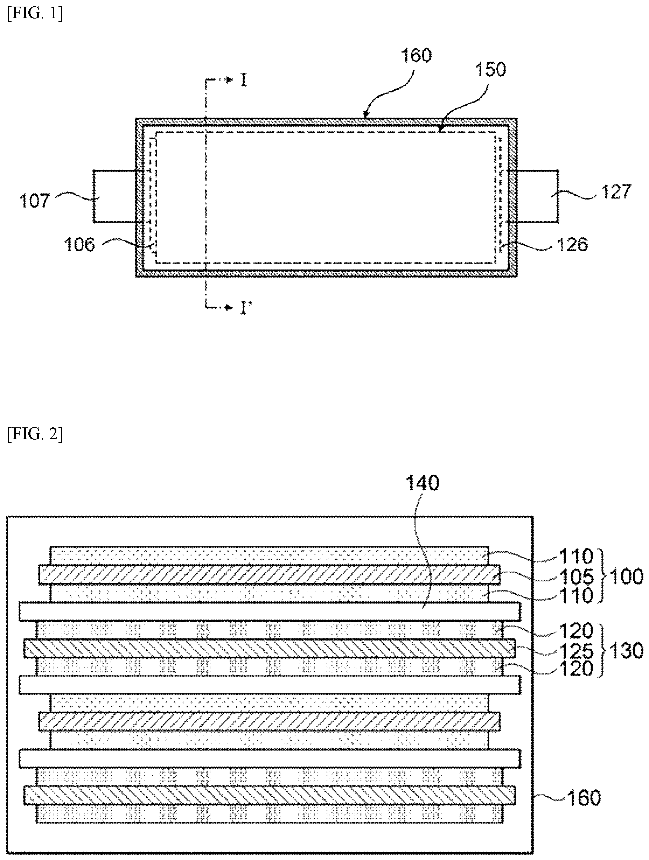

FIGS. 1 and 2 are a schematic plan view and a cross-sectional view illustrating a lithium secondary battery according to exemplary embodiments, respectively. FIG. 2 is a cross-sectional view taken on line I-I' of FIG. 1.

Referring to FIGS. 1 and 2, the lithium secondary battery may include an electrode assembly 150 and a case 160 in which the electrode assembly 150 is housed.

The electrode assembly 150 may include a cathode 100 and an anode 130 disposed to face the cathode 100.

In one embodiment, the electrode assembly 150 may include a plurality of cathodes and a plurality of anodes which are alternately and repeatedly disposed.

In one embodiment, the electrode assembly 150 may further include a separation membrane 140 interposed between the cathode 100 and the anode 130.

For example, the cathode 100 may include a cathode current collector 105 and a cathode active material layer 110 on the cathode current collector 105. For example, the cathode active material layer 110 may be formed on one or both surfaces of the cathode current collector 105.

For example, the cathode current collector 105 may include stainless steel, nickel, aluminum, titanium, copper or an alloy thereof.

The cathode active material layer 110 may include cathode active material particles capable of reversibly intercalating and deintercalating lithium ions. For example, the cathode active material particles may include lithium metal oxide particles.

In exemplary embodiments, the cathode active material particles may include over-lithiated oxide particles.

In one embodiment, the over-lithiated oxide particles may include $Li_2MnO_3$ domains (C2/m space group) and $Li_aM_bO_c$ domains (R3m space group, wherein M is at least one of Ni, Mn, Co, Mg, V, Ti, Al, Fe, Ru, Zr, W, Sn, Nb, Mo, Cu, Zn, Cr, Ga, V and Bi, and a, b and c satisfy $1.8 \leq a+b \leq 2.2$, $0.9 \leq a/b < 1.05$ and $1.9 \leq c \leq 2.1$).

In some embodiments, in the over-lithiated oxide particles, a molar ratio of the $Li_2MnO_3$ domains and the $LiMO_2$ domains may be represented as w:1-w, wherein w may range from 0.05 to 0.7, or from 0.1 to 0.7.

For example, the over-lithiated oxide particles may be prepared by a co-precipitation method.

For example, various types of of metal salts, a chelating agent (e.g., ammonia water, ammonium carbonate, etc.) and a co-precipitant (e.g., sodium hydroxide, sodium carbonate, etc.) may be mixed and subjected to a co-precipitation reaction to prepare metal hydroxide particles. For example, a molar ratio between the various types of metal salts may be adjusted based on a predetermined formula.

For example, the over-lithiated oxide particles may be prepared by mixing the metal hydroxide particles and a lithium source so that a molar ratio of the lithium source to the number of moles of the metal hydroxide particles ranges from 1.05 to 1.95, from 1.1 to 1.95, from 1.15 to 1.95 or from 1.2 to 1.95, followed by calcining the same.

In one embodiment, the lithium source may include lithium hydroxide or lithium carbonate. In some embodiments, the lithium source may include lithium hydroxide.

In one embodiment, the calcination may be performed at 400 to 1100°C. For example, the calcination may be performed for 2 to 16 hours.

In some embodiments, the calcination may include a first calcination performed at 200 to 300°C and a second calcination performed at 700 to 1100°C. In this case, an electrochemically active surface area of the over-lithiated oxide particles may be reduced. Accordingly, the voltage decay of the lithium secondary battery to be described below may be further suppressed.

In some embodiments, the first calcination may be performed for 1 to 6 hours. The second calcination may be performed for 2 to 16 hours.

For example, the over-lithiated oxide particles may be activated by applying a voltage of 4.4 V (vs Li/Li$^+$) or more (e.g., 4.4 V to 4.8 V) to the over-lithiated oxide particles (see Scheme 1-1 below). Alternatively, the over-lithiated oxide particles may be activated by charging and discharging a preliminary lithium secondary battery including the over-lithiated oxide particles at a voltage of 4.4 V (vs Li/Li$^+$) or more (see Schemes 1-1 and 1-2 below).

In one embodiment, the activated particles may include domains derived from $Li_2MnO_3$ domains of the over-lithiated oxide particles.

In some embodiments, the domain derived from the $Li_2MnO_3$ domains may include at least one of $MnO_2$, $Mn_2O_4$, $LiMnO_2$, $LiMn_2O_4$ and $Li_2Mn_2O_4$.

For example, at least some of the $Li_2MnO_3$ domains of the over-lithiated oxide particles may be converted into $MnO_2$ and $LiMnO_2$ by the activation as shown in Schemes 1-1 and 1-2 below. The $MnO_2$ and $LiMnO_2$ may reversibly intercalate and deintercalate lithium ions as shown in Scheme 2 below.

[Scheme 1-1]    (Charge) $Li_2MnO_3 \rightarrow MnO_2 + 2Li^+ + 1/2O_2 + 2e^-$

[Scheme 1-2]    (Discharge) $MnO_2 + Li^+ + e^- \rightarrow LiMnO_2$

[Scheme 2]    (Charge) $LiMnO_2 \rightarrow MnO_2 + Li^+ + e^-$(Discharge) $MnO_2 + Li^+ + e^- \rightarrow LiMnO_2$

In some embodiments, the $LiMnO_2$ of the activated particles may be further reacted to be converted into $Mn_2O_4$, $LiMn_2O_4$ or $Li_2Mn_2O_4$.

In some embodiments, the activated particles may include domains derived from the $Li_aM_bO_c$ domains, and $Li_2MnO_3$ domains and/or the $Li_2MnO_3$ domains.

In exemplary embodiments, the over-lithiated oxide particles and/or the activated particles may be represented by Formula 1 below.

[Formula 1]    $Li_a[M_xNi_yMn_z]O_b$

In Formula 1, M may be at least one of Co, Mg, V, Ti, Al, Fe, Ru, Zr, W, Sn, Nb, Mo, Cu, Zn, Cr, Ga, V and Bi.

In addition, x, y, z a and by may satisfy $0 \leq x \leq 0.9$, $0 \leq y \leq 0.9$ (wherein x+y>0), $0.1 \leq z \leq 0.9$, $1.8 \leq a+x+y+z \leq 2.2$, $1.05 \leq a/(x+y+z) \leq 1.95$ and $1.8 \leq b \leq 2.2$.

In some embodiments, x may satisfy $0 < x \leq 0.9$, $0.05 \leq x \leq 0.9$, $0.1 \leq x \leq 0.9$, $0 < x \leq 0.8$, $0.05 \leq x \leq 0.8$, or $0.1 \leq x \leq 0.8$.

In some embodiments, y may satisfy $0 < y \leq 0.9$, $0.05 \leq y \leq 0.9$, $0.1 \leq y \leq 0.9$, $0 < y \leq 0.8$, $0.05 \leq y \leq 0.8$, or $0.1 \leq y \leq 0.8$.

In some embodiments, a, x, y and z may satisfy $1.1 \leq a/(x+y+z) \leq 1.95$, $1.15 \leq a/(x+y+z) \leq 1.95$, $1.2 \leq a/(x+y+z) \leq 1.95$, or $1.3 \leq a/(x+y+z) \leq 1.95$.

In some embodiments, a mole fraction of manganese to all elements except for lithium and oxygen in the over-lithiated oxide particles may range from 0.5 to 0.75. For example, x, y and z may satisfy $0.5 \leq z/(x+y+z) \leq 0.75$.

In some embodiments, x, y and z may satisfy $0.25 \leq (x+y)/(x+y+z) \leq 0.5$.

In some embodiments, a mole fraction of cobalt to all elements except for lithium and oxygen in the over-lithiated oxide particles may range from 0 to 0.02. In some embodiments, the over-lithiated oxide particles may not contain cobalt.

In some embodiments, b may satisfy $1.9 \leq b \leq 2.1$, or $1.95 \leq b \leq 2.05$.

For example, compositions of the over-lithiated oxide particles and the activated particles may be confirmed by inductively coupled plasma (ICP). For example, the over-lithiated oxide particles and/or the activated particles may be analyzed by ICP, and the number of oxygen atoms may be normalized in a range of 1.8 to 2.2 (e.g., 2), thus to obtain formulas of the over-lithiated oxide particles and/or the activated particles.

Meanwhile, a lithium secondary battery using the over-lithiated oxide particles as a cathode active material may experience voltage decay during operation. Accordingly, the electrochemical performance of the lithium secondary battery may be deteriorated.

In one embodiment, the cathode active material particles may further include a coating material formed on at least a portion of the surface of the over-lithiated oxide particles, and containing a coating element. In this case, an upper limit of operation voltage of the lithium secondary battery may be adjusted, thereby suppressing the voltage decay of the lithium secondary battery.

In some embodiments, the coating material may form a coating layer having a sea-type pattern. Alternatively, the coating material may form a coating layer having an island-type pattern.

In one embodiment, the coating element may include a metal element and/or a metalloid element.

In some embodiments, the coating element may include B, Al, W, Zr, Ti, Mg, Co, etc. In some embodiments, the coating element may include B.

In one embodiment, a content of the coating element in the cathode active material particles may range from 500 to 8,000 ppm, from 1,000 to 8,000 ppm, or from 1,500 to 8,000 ppm based on a total weight of all elements except for lithium and oxygen. Within the above range, a decrease in initial capacity and an increase in resistance of the lithium secondary battery may be further prevented, and the voltage decay of the lithium secondary battery may be further suppressed.

For example, the coating material may be formed by a dry coating method or a wet coating method. For example, the coating material may be formed on the surface of the over-lithiated oxide particles by dry mixing or wet mixing the over-lithiated oxide particles and a coating source, and performing heat treatment (e.g., calcination or drying).

For example, the coating source may contain B, Al, W, Zr, Ti, Mg, Co, etc., and the coating sources known in the art may be used.

In some embodiments, the drying or calcination temperature during the coating may be 200 to 450°C. In this case, the coating material may intensively exist on the surface of the over-lithiated oxide particles without being diffused into the over-lithiated oxide particles. Accordingly, the voltage decay of the lithium secondary battery may be further suppressed.

In one embodiment, the cathode active material layer 110 may further include a binder and a conductive material.

In one embodiment, the binder may include an organic binder such as polyvinylidene fluoride (PVDF), vinylidene fluoride-hexafluoropropylene copolymer, polyacrylonitrile, or polymethyl methacrylate, etc.; or an aqueous binder such as styrene-butadiene rubber (SBR). In addition, the binder may be used together with a thickener such as carboxymethyl cellulose (CMC).

In one embodiment, the conductive material may include a carbon-based conductive material such as graphite, carbon black, graphene, carbon nanotubes (CNTs), etc.; a metal-based conductive material such as tin, tin oxide, titanium oxide, or a perovskite material such as $LaSrCoO_3$, and $LaSrMnO_3$, etc.

In one embodiment, a content of the cathode active material particles may be 80% by weight ("wt%") or more, 85 wt% or more, or 90 wt% or more based on a total weight of the cathode active material layer 110. In some embodiments, the content of the cathode active material particles may be 98 wt% or less, or 95 wt% or less based on the total weight of the cathode active material layer 110.

In one embodiment, a content of the activated particles may be 80 wt% or more, 85 wt% or more, or 90 wt% or more based on the total weight of the cathode active material layer 110. In some embodiments, the content of the activated particles may be 98 wt% or less, or 95 wt% or less based on the total weight of the cathode active material layer 110.

For example, the anode 130 may include an anode current collector 125 and an anode active material layer 120 on the anode current collector 125. For example, the anode active material layer 120 may be formed on one or both surfaces of the anode current collector 125.

For example, the anode active material layer 120 may include an anode active material, the binder and the conductive material.

For example, the anode current collector 125 may include gold, stainless steel, nickel, aluminum, titanium, copper or an alloy thereof.

In one embodiment, the anode active material may be a material capable of intercalating and deintercalating lithium ions. For example, the anode active material may include a lithium alloy, a carbon-based active material, a silicon-based active material, etc.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbeads, mesophase pitch-based carbon fiber and the like.

For example, the crystalline carbon may include natural graphite, artificial graphite, graphite cokes, graphite MCMB, graphite MPCF and the like.

For example, the silicon-based active material may include Si, $SiO_x$ (0<x<2), Si/C, SiO/C, Si-Metal and the like.

In some embodiments, the anode 130 may have an area greater than that of the cathode 100.

In one embodiment, the cathode current collector 105 may include a cathode tab 106 protruding from one side of the cathode current collector 105.

For example, the cathode tab 106 may be formed integrally with the cathode current collector 105 or may be connected with the cathode current collector 105 by welding, etc. The cathode current collector 105 and the cathode lead 107 may be electrically connected with each other through the cathode tab 106.

In one embodiment, the anode current collector 125 may include an anode tab 126 protruding from one side of the anode current collector 125.

For example, the anode tab 126 may be formed integrally with the anode current collector 125, or may be electrically connected with the anode current collector 125 by welding, etc. The anode current collector 125 and the anode lead 127 may be electrically connected with each other through the anode tab 126.

For example, the separation membrane 140 may include a porous polymer film made of a polyolefin polymer such as polyethylene, polypropylene, ethylene-butene copolymer, ethylene-hexene copolymer, or ethylene-methacrylate copolymer. For example, the separation membrane 140 may include a nonwoven fabric made glass fiber having a high melting point, polyethylene terephthalate fiber or the like.

For example, the electrode assembly 150 and the electrolyte may be housed together in a pouch case 160 to form a lithium secondary battery.

In one embodiment, the electrolyte may include a lithium salt and an organic solvent.

In one embodiment, the lithium salt may include $Li^+X^-$. For example, $X^-$ may be at least one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(F SO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In one embodiment, the organic solvent may include a carbonate solvent such as ethylene carbonate (EC), propylene carbonate (PC), dimethyl carbonate (DMC), diethyl carbonate (DEC), ethyl methyl carbonate (EMC), etc.; an ester solvent such as methyl propionate, ethyl propionate, ethyl acetate, propyl acetate, butyl acetate, butyrolactone, caprolactone, valerolactone, etc.; an ether solvent such as dibutyl ether, tetraethylene glycol dimethyl ether (TEGDME), diethylene glycol dimethyl ether (DEGDME), tetrahydrofuran (THF), etc.; an alcohol solvent such as ethyl alcohol, isopropyl alcohol, etc.; a ketone solvent such as cyclohexanone, etc.; an aprotic solvent such as an amide solvent (e.g., dimethylformamide), a dioxolane solvent (e.g., 1,3-dioxolane), a sulfolane solvent, a nitrile solvent, etc.

In exemplary embodiments, an upper limit of operation voltage of the lithium secondary battery may be 4.5 V or less relative to an oxidation-reduction potential of lithium (i.e., a redox potential) (vs Li/Li$^+$). For example, the lithium secondary battery may be operated in a voltage section of 4.5 V (vs Li/Li$^+$) or less. The "upper limit of operation voltage" refers to the upper voltage limit during actual operation of the lithium secondary battery (i.e., during actual use), and may be distinguished from the activation voltage during an activation process in a manufacturing process of the lithium secondary battery. Accordingly, the voltage decay and energy reduction of the lithium secondary battery may be suppressed.

In one embodiment, a lower limit of operation voltage of the lithium secondary battery may be 1.8 V or more, 1.9 V or more, or 2.0 V or more relative to the oxidation-reduction potential of lithium (vs Li/Li$^+$). In some embodiments, the lower limit of operation voltage may be 1.8 V to 2.2 V.

In some embodiments, an operation voltage range (i.e., an operation voltage section) of the lithium secondary battery may range from 2 V (vs Li/Li$^+$) to 4.5 V (vs Li/Li$^+$).

In one embodiment, the lithium secondary battery may have a D value of greater than 0 and less than 0.31, which is represented by Equation 1 below. Within the above range, the voltage decay of the lithium secondary battery may be further suppressed.

[Equation 1]

$$D = I(Mn^{3+})/[I(Mn^{3+})+I(Mn^{4+})]$$

In Equation 1, $I(Mn^{3+})$ is an area of $Mn^{3+}$ peak in an XPS analysis spectrum when charging and discharging the lithium secondary battery 100 times at 45 ° C and in a voltage range of 2.0 V to 4.5 V, followed by disassembling and analyzing the cathode active material layer by X-ray photoelectron spectroscopy (XPS). In addition, $I(Mn^{4+})$ is an area of $Mn^{4+}$ peak in the XPS analysis spectrum.

In some embodiments, the D value may be greater than 0 and less than 0.3, greater than 0 and less than 0.29, or greater than 0 and less than 0.27. Alternatively, the D value may range from 0.05 to 0.3, from 0.05 to 0.29, or from 0.05 to 0.27. Within the above range, the voltage decay of the lithium secondary battery may be further suppressed.

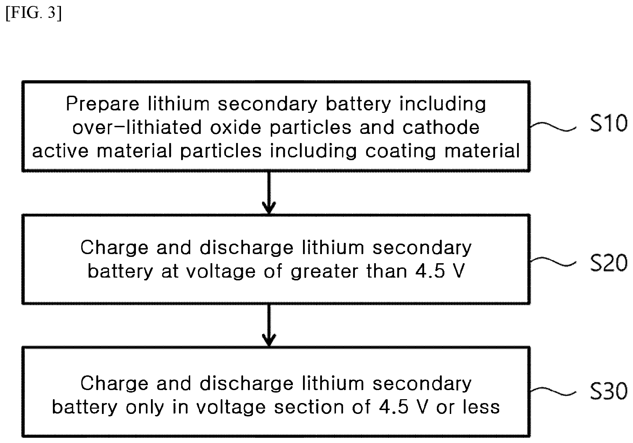

FIG. 3 is a flowchart briefly illustrating an operation method of a lithium secondary battery according to exemplary embodiments.

Referring to FIG. 3, a lithium secondary battery which includes a cathode including the over-lithiated oxide particles and the cathode active material particles including the coating material, and an anode may be prepared (e.g., S10).

The step of preparing the lithium secondary battery may include charging and discharging the lithium secondary battery at a voltage of 4.4 V or more, greater than 4.5 V, or 4.6 V or more (e.g., S20). For example, the charging and discharging may be performed in a range of 1 to 10 times, 1 to 5 times, or 1 to 3 times.

The lithium secondary battery may be charged and discharged only in a voltage section of 4.5 V or less relative to the oxidation-reduction potential of lithium (e.g., S30).

For example, S20 may correspond to the activation stage in the manufacturing process of the lithium secondary battery. In addition, S30 may correspond to the actual operation stage (i.e., the actual use stage) of the lithium secondary battery. By defining the upper limit of operation voltage of the actual operation stage of the lithium secondary battery to 4.5 V or less, the voltage decay of the lithium secondary battery may be suppressed.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

## Preparative Example 1

### (1) Preparation of over-lithiated oxide particles

Distilled water from which dissolved oxygen was removed was input into a sealed reactor, and $NiSO_4 \cdot 6H2O$ and $MnSO_4 \cdot H2O$ were additionally input at a molar ratio of 40:60.

NaOH (precipitant) and $NH_4OH$ (chelating agent) were additionally input into the reactor, and a co-precipitation reaction was performed for 72 hours, thus to prepare metal hydroxide particles.

The metal hydroxide particles were dried at 100°C for 12 hours, and then again dried at 120 ° C for 12 hours.

The metal hydroxide particles and lithium hydroxide were input into a dry mixer to prepare a mixture.

A mixing ratio of the metal hydroxide particles and lithium hydroxide was adjusted so that the prepared lithium metal oxide particles satisfied the compositions according to the following ICP analysis.

The mixture was loaded into a calcination furnace, and the temperature of the calcination furnace was increased to 250 ° C at a rate of 2°C/min, then a first calcination was performed while maintaining the temperature at 250°C for 4 hours.

After the first calcination, the temperature of the calcination furnace was increased to 900 ° C at a rate of 2 ° C/min, and a second calcination was performed while maintaining the temperature at 900 ° C for 9 hours.

During the first and second calcinations, oxygen gas was continuously passed through the calcination furnace at a flow rate of 10 mL/min.

After complementation of the calcination, the calcined product was naturally cooled to room temperature, followed by pulverization and classification to prepare over-lithiated oxide particles.

As a result of analyzing the over-lithiated oxide particles by ICP (normalizing the number of oxygen atoms to 2), they were confirmed as $Li_{1.09}Ni_{0.38}Mn_{0.34}O_2$.

### (2) Coating of over-lithiated oxide particles

The over-lithiated oxide particles and $H_3BO_3$ were placed in a dry high-speed mixer and uniformly mixed for 5 minutes, thus to prepare a mixture.

The mixture was loaded into the calcination furnace, and the temperature was increased to 350°C at a rate of 3°C/min, then maintained at 350°C for 5 hours. During increasing and maintaining the temperature, oxygen gas was continuously passed through the calcination furnace at a flow rate of 10 mL/min.

After completion of the calcination, the calcined product was naturally cooled to room temperature, thus to prepare over-lithiated oxide particles coated with boron.

A content of B in the over-lithiated oxide particles coated with boron was measured (by ICP analysis) to be 1,800 ppm based on the total weight of all elements (i.e., Ni, Mn and B) except for lithium and oxygen.

### (3) Manufacture of preliminary lithium secondary battery (half-coin cell)

The over-lithiated oxide particles as a cathode active material, carbon black as a conductive material, and polyvinylidene fluoride (PVDF) as a binder were mixed in a mass ratio of 92:5:3, and then the mixture was dispersed in N-methyl-2-pyrrolidone (NMP) to prepare a cathode slurry.

The cathode slurry was applied to an aluminum foil, followed by drying and pressing the same, to prepare a cathode. Lithium metal was used as a counter electrode (anode).

The cathode and anode were laminated by notching into circular shapes having a diameter of $\Phi$ 14 and $\Phi$16, respectively, and a separation membrane (PE, thickness 13 $\mu$m) notched into $\Phi$19 was interposed between the cathode and the anode to form an electrode assembly.

The electrode assembly was placed in a coin cell case (2016 standard), and an electrolyte was injected into the coin cell case to manufacture a preliminary lithium secondary battery.

The electrolyte used herein was prepared by dissolving 1M $LiPF_6$ solution in a mixed solvent of EC/EMC (30/70, v/v).

**(4) Activation of preliminary lithium secondary battery**

The preliminary lithium secondary battery was repeatedly subjected to CC/CV charging (0.1C, 4.6 V CUT-OFF) and CC discharging (0.1C, 2.0 V CUT-OFF) twice at 25°C, to activate the over-lithiated oxide particles.

**Preparative Example 2**

A lithium secondary battery was manufactured in the same manner as described in Preparative Example 1, except that the first calcination was not performed during the calcination and only the second calcination was performed for 13 hours.

**Preparative Example 3**

A lithium secondary battery was manufactured in the same manner as described in Preparative Example 1, except that the over-lithiated oxide particles were not coated with B.

**Examples and Comparative Examples**

According to Table 1 below, the type of lithium secondary battery (Preparative Example 1, 2 or 3) and the upper limit of cycle voltage (4.5 V or 4.6 V, vs Li/Li$^+$) were set differently.

**Experimental Example 1: Evaluation of voltage drop**

The lithium secondary batteries of the examples and comparative examples were CC/CV charged (1C, upper voltage limit CUT-OFF according to Table 1) and CC discharged (1C, 2.0 V CUT-OFF) at 45°C.
The charging and discharging were performed repeatedly 100 times.
An average discharge voltage of the discharge profiles of the first cycle and the 100th cycle were calculated, respectively, then an absolute value of difference values between the average discharge voltages was calculated.

**Experimental Example 2: XPS analysis**

After completing the evaluation according to Experimental Example 1, the lithium secondary batteries of the examples and comparative examples were disassembled to obtain cathodes.
The cathode active material layer of the cathode was analyzed by XPS.
The XPS analysis equipment and measurement conditions are as follows.

ESCALAB 250xi, Thermo Fisher Scientific

X-ray: Al k alpha, 1486.68eV, 500um Beam size,

Analyzer: CAE mode,

Number of scans: 20 Narrow Scan,

Pass energy: 20 eV

Based on the XPS analysis values, the D value of Equation 1 below was calculated.

$$[\text{Equation } 1]$$

$$D = I(Mn^{3+})/[I(Mn^{3+})+I(Mn^{4+})]$$

In Equation 1, I(Mn$^{3+}$) is an area of Mn$^{3+}$ peak in an XPS analysis spectrum, and I(Mn$^{4+}$) is an area of Mn$^{4+}$ peak.

[TABLE 1]

| | Lithium secondary battery | Upper limit of cycle voltage (V) | D value at 100th cycle | Voltage decay at 100th cycle (mV) |
|---|---|---|---|---|
| Example 1 | Preparative Example 1 | 4.5 | 0.26 | 232 |
| Example 2 | Preparative Example 2 | 4.5 | 0.29 | 255 |
| Comparative Example 1 | Preparative Example 3 | 4.6 | 0.75 | 350 |
| Comparative Example 2 | Preparative Example 3 | 4.5 | 0.67 | 319 |
| Comparative Example 3 | Preparative Example 1 | 4.6 | 0.34 | 353 |

Referring to Table 1 above, the lithium secondary batteries of the examples have suppressed voltage decay compared to the lithium secondary batteries of the comparative examples.

The contents described above are merely an example of applying the principle of the present disclosure, and other configurations may be further included without departing from the scope of the present invention.

## Claims

1. A lithium secondary battery comprising:

   a cathode which comprises a cathode current collector, and a cathode active material layer formed on the cathode current collector and including cathode active material particles; and
   an anode disposed to face the cathode,
   wherein the cathode active material particles comprise over-lithiated oxide particles represented by Formula 1 below, and a coating material formed on at least a portion of the surface of the over-lithiated oxide particles and containing a coating element, and
   an upper limit of operation voltage is 4.5 V or less relative to an oxidation-reduction potential of lithium:

   $$[\text{Formula 1}] \qquad Li_a[M_xNi_yMn_z]O_b$$

   (in Formula 1, M is at least one of Co, Mg, V, Ti, Al, Fe, Ru, Zr, W, Sn, Nb, Mo, Cu, Zn, Cr, Ga, V and Bi, and x, y, z, a and b satisfy $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$).

2. The lithium secondary battery according to claim 1, wherein the lithium secondary battery has a D value of greater than 0 and less than 0.31, which is represented by Equation 1 below:

   $$[\text{Equation 1}]$$

   $$D = I(Mn^{3+})/[I(Mn^{3+})+I(Mn^{4+})]$$

   (in Equation 1, $I(Mn^{3+})$ is an area of $Mn^{3+}$ peak in an XPS analysis spectrum when charging and discharging the lithium secondary battery 100 times at 45 °C and in a voltage range of 2.0 V to 4.5 V, followed by disassembling and analyzing the cathode active material layer by X-ray photoelectron spectroscopy (XPS); and $I(Mn^{4+})$ is an area of $Mn^{4+}$ peak in the XPS analysis spectrum.)

3. The lithium secondary battery according to claim 1, wherein a content of manganese in the over-lithiated oxide particles ranges from 50 to 75 mol% based on a total number of moles of all elements except for lithium and oxygen.

4. The lithium secondary battery according to claim 1, wherein a content of cobalt in the over-lithiated oxide particles is 2 mol% or less based on the total number of moles of all elements except for lithium and oxygen.

5. The lithium secondary battery according to claim 1, wherein the over-lithiated oxide particle comprises at least one of

domains derived from $Li_2MnO_3$ domains and $Li_2MnO_3$ domains.

6. The lithium secondary battery according to claim 5, wherein the domain derived from the $Li_2MnO_3$ domains comprises at least one selected from the group consisting of $MnO_2$, $Mn_2O_4$, $LiMnO_2$, $LiMn_2O_4$ and $Li_2Mn_2O_4$.

7. The lithium secondary battery according to claim 1, wherein the coating element comprises at least one selected from the group consisting of B, Al, W, Zr, Ti, Mg and Co.

8. The lithium secondary battery according to claim 1, wherein a content of the coating element in the cathode active material particles ranges from 500 to 8,000 ppm based on a total weight of all elements except for lithium and oxygen.

9. The lithium secondary battery according to claim 1, wherein a content of the over-lithiated oxide particles is 80 wt% or more based on a total weight of the cathode active material layer.

10. The lithium secondary battery according to claim 1, wherein an operation voltage range ranges from 2.0 V to 4.5 V relative to the oxidation-reduction potential of lithium.

11. An operation method of a lithium secondary battery comprising:

preparing a lithium secondary battery which comprises: a cathode comprising cathode active material particles which comprise over-lithiated oxide particles represented by Formula 1 below, and a coating material formed on at least a portion of the surface of the over-lithiated oxide particles and containing a coating element; and an anode; and
charging and discharging the lithium secondary battery only in a voltage section of 4.5 V or less relative to an oxidation-reduction potential of lithium:

$$[\text{Formula 1}] \qquad Li_a[M_xNi_yMn_z]O_b$$

(in Formula 1, M is at least one of Co, Mg, V, Ti, Al, Fe, Ru, Zr, W, Sn, Nb, Mo, Cu, Zn, Cr, Ga, V and Bi, and x, y, z, a and b satisfy $0 \leq x \leq 0.9$, $0 \leq y \leq 0.9$, $x+y>0$, $0.1 \leq z \leq 0.9$, $1.8 \leq a+x+y+z \leq 2.2$, $1.05 \leq a/(x+y+z) \leq 1.95$ and $1.8 \leq b \leq 2.2$).

12. The operation method of a lithium secondary battery according to claim 11, wherein the step of preparing a lithium secondary battery comprises
charging and discharging the lithium secondary battery in a range of 1 to 10 times at a voltage greater than 4.5 V relative to the oxidation-reduction potential of lithium.

[FIG. 1]

[FIG. 2]

[FIG. 3]

| Prepare lithium secondary battery including over-lithiated oxide particles and cathode active material particles including coating material | S10 |

↓

| Charge and discharge lithium secondary battery at voltage of greater than 4.5 V | S20 |

↓

| Charge and discharge lithium secondary battery only in voltage section of 4.5 V or less | S30 |

# EP 4 576 256 A1

## INTERNATIONAL SEARCH REPORT

| International application No. |
|---|
| **PCT/KR2023/012102** |

| A. | CLASSIFICATION OF SUBJECT MATTER |
|---|---|

**H01M 4/505**(2010.01)i; **H01M 4/525**(2010.01)i; **H01M 4/36**(2006.01)i; **H01M 10/058**(2010.01)i; **H01M 10/0525**(2010.01)i; **H01M 10/44**(2006.01)i; **H01M 4/62**(2006.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/505(2010.01); H01M 10/052(2010.01); H01M 10/0525(2010.01); H01M 10/0567(2010.01); H01M 4/131(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 음극 (anode), 리튬과잉산화물입자(overlithiated oxide particle), 코팅(coating), 작동상한전압(operating cut-off voltage)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2013-0108332 A (ENVIA SYSTEMS, INC.) 02 October 2013 (2013-10-02) See claims 1, 4-5, 7, 13 and 35; and paragraphs [0022], [0034], [0065], [0067]-[0079], [0121]-[0136] and [0143]-[0144]. | 1-12 |
| A | KR 10-2015-0048026 A (SAMSUNG SDI CO., LTD.) 06 May 2015 (2015-05-06) See claim 1; and paragraphs [0108], [0112] and [0118]. | 1-12 |
| A | KR 10-1540673 B1 (LG CHEM, LTD.) 30 July 2015 (2015-07-30) See entire document. | 1-12 |
| A | KR 10-2020-0047199 A (SAMSUNG ELECTRONICS CO., LTD. et al.) 07 May 2020 (2020-05-07) See entire document. | 1-12 |
| A | KR 10-1919531 B1 (POSCO et al.) 16 November 2018 (2018-11-16) See entire document. | 1-12 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

14

## INTERNATIONAL SEARCH REPORT
### Information on patent family members

| International application No. |
|---|
| **PCT/KR2023/012102** |

| Patent document cited in search report | | | Publication date (day/month/year) | Patent family member(s) | | | Publication date (day/month/year) |
|---|---|---|---|---|---|---|---|
| KR | 10-2013-0108332 | A | 02 October 2013 | CN | 103168383 | A | 19 June 2013 |
| | | | | CN | 103901960 | A | 02 July 2014 |
| | | | | CN | 103901960 | B | 05 September 2017 |
| | | | | EP | 2612393 | A2 | 10 July 2013 |
| | | | | EP | 2612393 | A4 | 05 November 2014 |
| | | | | JP | 2013-539594 | A | 24 October 2013 |
| | | | | WO | 2012-030639 | A2 | 08 March 2012 |
| KR | 10-2015-0048026 | A | 06 May 2015 | JP | 2015-084303 | A | 30 April 2015 |
| KR | 10-1540673 | B1 | 30 July 2015 | CN | 104471759 | A | 25 March 2015 |
| | | | | CN | 104471759 | B | 12 January 2018 |
| | | | | EP | 2882014 | A1 | 10 June 2015 |
| | | | | EP | 2882014 | A4 | 06 April 2016 |
| | | | | JP | 2015-528181 | A | 24 September 2015 |
| | | | | JP | 6099741 | B2 | 22 March 2017 |
| | | | | KR | 10-2014-0018685 | A | 13 February 2014 |
| | | | | US | 2015-0162598 | A1 | 11 June 2015 |
| | | | | US | 9825283 | B2 | 21 November 2017 |
| | | | | WO | 2014-021626 | A1 | 06 February 2014 |
| KR | 10-2020-0047199 | A | 07 May 2020 | CN | 111106342 | A | 05 May 2020 |
| | | | | EP | 3644418 | A1 | 29 April 2020 |
| | | | | EP | 3644418 | B1 | 10 August 2022 |
| | | | | JP | 2020-068212 | A | 30 April 2020 |
| | | | | US | 11527773 | B2 | 13 December 2022 |
| | | | | US | 2020-0136174 | A1 | 30 April 2020 |
| KR | 10-1919531 | B1 | 16 November 2018 | CN | 110121801 | A | 13 August 2019 |
| | | | | EP | 3561919 | A1 | 30 October 2019 |
| | | | | EP | 3561919 | A4 | 08 January 2020 |
| | | | | JP | 2020-514970 | A | 21 May 2020 |
| | | | | KR | 10-2018-0073293 | A | 02 July 2018 |
| | | | | US | 2019-0341599 | A1 | 07 November 2019 |
| | | | | WO | 2018-117644 | A1 | 28 June 2018 |

Form PCT/ISA/210 (patent family annex) (July 2022)